# EUROPÄISCHE PATENTSCHRIFT

(11) **EP 1 307 286 B1**
(45) Veröffentlichungstag und Bekanntmachung des Hinweises auf die Patenterteilung: **13.08.2008**
(21) Anmeldenummer: 01964892.2
(22) Anmeldetag: 10.08.2001
(51) Int. Cl.: B01J 19/00

(54) **NUKLEINSÄURENBIBLIOTHEK ODER PROTEIN- ODER PEPTIBIBLIOTHEK**
NUCLEIC ACID LIBRARY OR PROTEIN OR PEPTIDE LIBRARY
BIBLIOTHEQUE D'ACIDES NUCLEIQUES OU BIBLIOTHEQUE DE PEPTIDES OU DE PROTEINES

(30) Priorität: 11.08.2000 DE 10040857
(43) Veröffentlichungstag der Anmeldung: 07.05.2003
(73) Patentinhaber: Fürste, Jens Peter, 14195 Berlin (DE); Erdmann, Volker A., 14163 Berlin (DE)
(72) Erfinder: Fürste, Jens Peter, 14195 Berlin (DE); Erdmann, Volker A., 14163 Berlin (DE)
(74) Vertreter: Jungblut, Bernhard Jakob
(86) Internationale Anmeldenummer: PCT/DE2001/003067
(87) Internationale Veröffentlichungsnummer: WO 2002/013960

(56) Entgegenhaltungen:
- EP-A- 0 776 700
- WO-A-01/38583
- US-A- 5 759 779
- US-A- 5 763 263
- US-A- 5 985 651

## Beschreibung

### Technisches Feld der Erfindung

Die Erfindung betrifft ein verfahren zur Herstellung einer Nukleinsäurenbibliothek in Form einer zweidimensional ortsaufgelösten Rasteranordnung mit einer Vielzahl von Rasterelementen, wobei jedes Rasterelement im statistischen Mittel eine gewunschte Anzahl von Nukleinsäuretypen mit jeweils spezifischem Sequenzaufbau enthält.

Als Bibliothek wird eine in den Rasterelementen immobilisierte heterogene Population von Nukleinsäuren oder Proteinen oder Peptiden verstanden. Heterogen meint, daß verschiedene Nukleinsäuretypen oder Protein- oder Peptidtypen mit voneinander verschiedenem Sequenzaufbau in den Rasterelementen auf definierte ortsaufgelöste Weise verteilt sind. Ortsauflösung meint, daß mit der Position eines Rasterelements eine Information über die Sequenz oder die Sequenzen einer darin befindlichen Substanz oder mehrerer darin befindlicher Substanzen korreliert ist. Die definierte Anzahl kann 1 bis 100, vorzugsweise 1 bis 50, höchstvorzugsweise 1 bis 10, insbesondere 1, betragen. In letzterem Falle sind in einem einzelnen Rasterelement nur Nukleinsäuren oder Proteine oder Peptide ein und derselben Sequenz enthalten (oder keine dieser Substanzen; leeres Rasterelement). Immobilisiert meint in diesem Zusammenhang, daß die Nukleinsäuren, Proteine oder Peptide nicht aus den Rasterelementen ohne weiteres austreten können. Nukleinsäuren können RNA und DNA, aber auch PNA sein. Die Nukleinsäuren können naturlich oder Fragmente von solchen Nukleinsäuren sein, es ist aber ebenso möglich, nicht-natürliche Nukleinsäuren einzusetzen. Hierzu sind beispielsweise die Spiegelmere zu nennen. Aber auch chemisch modifizierte Derivate fallen unter die nicht-natürlichen Nukleinsäuren, ebenso wie nicht-natürliche Sequenzen.

### Hintergrund der Erfindung

Substanzbibliotheken werden in vielen Bereichen, beispielsweise der Molekularbiologie und der Wirkstoffindung, eingesetzt. Im Falle der Nukleinsäurebibliotheken dienen diese u.a. dazu, die Funktionen von Genen, beispielsweise in EST's codiert, zu erforschen, und zwar mit hohem Durchsatz. Im Falle der Protein-oder Peptidbibliotheken dienen diese beispielsweise in high capacity screening Verfahren zur Findung hochaffiner und hochwirksamer Pharmazeutika. Hier finden insbesondere kombinatorische Bibliotheken Einsatz. Substanzbibliotheken können aber auch dazu eingesetzt werden, physiologische Fehlfunktionen, beispielsweise mutationsbedingt, bei einem Patienten mit sehr großer Breite und Effektivität zu screenen und zu detektieren. Auch kann beispielsweise durch Expressionsvergleich wertvolle Information über genetische Varianten erhalten werden.

Eine Problematik von Substanzbibliotheken ist die Erzeugung und insbesondere Vereinzelung der einzelnen Verbindungen bzw. Verbindungstypen. Eine andere Problematik ist die Herstellung des ortaufgelösten Immobilisats mit den einzelnen Substanzen. Im allgemeinen finden hier sequenzielle Verfahren Anwendung, welche insbesondere bei hohen Populationen der Bibliotheken, beispielsweise 10³ bis 10⁸, extrem zeitaufwendig und teuer sind. Sequenziell meint, daß die Rasterelemente nacheinander mit den zugeordneten Verbindungen beladen werden.

### Stand der Technik

Aus der Literaturstelle Proc. Natl. Acad. Sci., 87:6296, 1990, ist es bekannt, über Verdünnungsreihen eine Mischung von Allelen soweit zu verdünnen, daß in den Verdünnungsfraktionen jeweils nur noch ein DNA Molekül vorliegt. Diese Moleküle können dann jeweils wiederum amplifiziert und analysiert werden.

Aus der Literaturstelle Nucleic Acids Res., 26:4339, 1998, ist ein grundsätzlich ähnliches Verfahren bekannt, wobei für jedes Verdünnungsprodukt ein Element einer 384-well Platte vorgesehen ist. Nach der Amplifikation wird eine Transkription/Translation durchgeführt mit dem Ergebnis einer Proteinbibliothek.

Ohne näheren Bezug ist der Einsatz der Chip Technologie erwähnt.

Aus der Literaturstelle US-A-5,641,658 ist die sogenannte Bridge-Technologie bekannt, mittels welcher in einer Probe bestimmten Amplifikationstargets detektiert werden können. Hierzu ist auf einem flächigen Träger ein Raster, beispielsweise 10x10, eingerichtet und innerhalb jedes Rasterelements sind zwei für ein Target spezifische Primer mit 5' an der Festphase gebunden. Innerhalb der Rasterelemente findet dann, bei Vorliegen von mit den Rasterelementen korrelierten Targets in der Probe, Amplifikation statt. Der Amplifikationsfaktor ist durch die Anzahl der Primermoleküle innerhalb eines Rasterelements begrenzt.

Aus der Literaturstelle Nucleic Acids Res., 27:e34, 1999, ist es bekannt, Acrylamid in einer PCR-Reagentien und in sehr geringer Konzentration DNA enthaltenden Lösung zu einem Gel zu polymerisieren. Hiernach wird die Amplifikation durchgeführt. Dabei entstehen aus den immobilisierten und lateral verteilten DNA Molekülen ebenfalls immobilisierte DNA Kolonien enthaltend jeweils identische DNA.

In der Literaturstelle DE 198 54 946.6-42 ist ein Verfahren zum Klonieren und zum Kopieren genetischen oder anderen biologischen Materials an Oberflächen bekannt, wobei die zu kopierenden Substanzen auf einer Festkör-peroberfläche immobilisiert sind und die Kopie durch Amplifikation bzw. Bindung komplementärer Substanzen mit subsequentem Übertragen und Binden an eine gegenüberliegende Festkörperoberfläche erfolgt.

In einer Vielzahl von Literaturstellen sind DMA-Chips beschrieben, welche in einem engen Rastermaß DNA Bibliotheken tragen. Die Herstellung erfolgt meist photolithographisch, wobei das "Auffüllen" der Rasterelemente sequentiell durchgeführt wird. Lediglich beispielhaft wird auf die Literaturstellen US-A-5,744,305, US-A-5,424,186, US-A-5,412,087 und US-A-6,022,963 verwiesen.

Dem im Wege der Verdünnungsreihen arbeitenden vorstehenden Stand der Technik ist gemeinsam, daß die Herstellung der Verdünnungsreihen und die Handhabung der einzelnen Verdünnungsfraktionen umständlich und aufwendig ist. Dieser Nachteil wächst überproportional mit der Anzahl der Verdünnungsfraktionen.

Dem mit an Festkörperoberflächen immobilisierten Substanzen arbeitenden Stand der Technik haftet der Nachteil an, daß alle Reaktionen an Oberflächen und nicht im Lösungsvolumen ablaufen. Dadurch werden gegenüber Reaktion in Lösung nur geringe Umsatzraten erzielt.

Bei dem vorstehenden Verfahren mit einem Polyacrylamidgel findet zwar eine Reaktion im Volumen statt, die Umsatzraten sind jedoch dennoch unbefriedigend gering, da die Reaktionen diffusionskontrolliert ablaufen und die Diffusionskoeffizienten sehr niedrig sind ("Quasiimmobilisierung" aufgrund des Gelzustandes).

Schließlich ist es in der Regel bei den bekannten Bibliotheken nicht möglich, auf einfache Weise Kopien herzustellen bzw. deren Vervielfältigung durchzuführen.

Aus der Literaturstelle EP-A-0 776 700 ist es bekannt, gleiche Lösungen mit Nukleinsäuren in Rasterelemente einer Rasteranordnung zu injizieren*.*

### Technisches Problem der Erfindung.

Der Erfindung liegt gegenüber dem Stand der Technik, das technische Problem zugrunde, ein Verfahren zur Herstellung einer Nukleinsäure bibliothek in Form einer zweidimensional ortsaufgelösten Rasteranordnung anzugeben, welches unkompliziert ist.

### Grundzüge der Erfindung

Zur Lösung dieses technischen Problems lehrt die Erfindung, den gegenstand des Anspruchs 1. Als Kapillarhohlräume sind Hohlräume bezeichnet, in welchen bei Kontaktierung der Öffnung mit einer wäßrigen Lösung Kapillaraszension stattfindet, i.e. wobei die Kohäsionskräfte in der wäßrigen Lösung kleiner als die Adhäsionskräfte der wäßrigen Lösung zur Kapillarinnenoberfläche sind. Mit anderen Worten ausgedrückt, die Kapillarinnenoberfläche ist von der wäßrigen Lösung benetzbar und hinsichtlich der Werkstoffoberfläche entsprechend ausgestattet. Eine Raster anordnung besteht demzufolge gleichsam aus einem Bündel paralleler, zumindest einseitig offener Kapillaren. Die Rasterfläche kann eben oder ein- oder zweidimensional gekrümmt sein. In jedem Fall erhält man im Bezugssystem der Rasterfläche eine zweidimensionsal ortsaufgelöste Zuordnung Substanz/Rasterelement.

Die in ein Rasterelement aufgesaugte Teilmenge an Lösung enthält im statistischen Mittel vorzugsweise ein Nukleinsäuremolekül. Mit anderen Worten ausgedrückt, die Rasterfläche wird mit einer verschiedene Nukleinsäuren in größeren Mengen enthaltenden Lösung, beispielsweise aus einer Zellpräparation oder einer "Eintopf"-Bibliothek, in Kontakt gebracht. Bei bekannter Nukleinsäurengesamtkonzentration und bekannter Steighöhe der Lösung in der Kapillaren läßt sich mit dem Kapillarenquerschnitt das angesaugte Volumen und somit die Menge bzw. Anzahl der angesaugten Nukleinsäuremoleküle berechnen. Hierbei sind die Dimensionierungen durch einfache Berechnung und/oder einfache versuche so zu treffen, daß rechnerisch im Mittel eine gewünschte Anzahl an Nukleinsäuremolekülen aufgenommen wird. Unter Ansatz der Poisson Verteilung bedeutet dies im Falle eines im statistischen Mittel einzelnen Moleküls bei exakter Betrachtung, daß 36,8% der Rasterelemente kein Nukleinsäuremolekül, 36,8% der Rasterelemente ein einzelnes Nukleinsäuremolekül und der Rest mehr als ein Nukleinsäuremolekül enthalten. Eine Überprüfung ist leicht möglich, indem, ggf. nach Amplifikation, der Anteil der leeren Rasterelemente ausgezählt wird. Im Rahmen der Erfindung soll beispielsweise das Kriterium "im statistischen Mittel 1 Molekül pro Rasterelement" als erfüllt betrachtet werden, wenn 10% bis 90%, vorzugsweise 10% bis 60%, höchstvorzugsweise 20% bis 45%, der Rasterelemente leer sind. Bei Ansatz von mehr als einem Molekül pro Rasterelement kann eine Überprüfung dadurch erfolgen, daß mittels der Statistik die Anzahl der Rasterelemente mit der gewünschten (definierten) Anzahl berechnet wird. Als unter die in Einzelfalle definierte Anzahl fallend wird dann die mit der statistischen Verteilung berechnete Anzahl Rasterelemente mit der gewünschten Anzahl an Molekülen +100% und -70% angesehen. Nach der subsequenten Trennung von der Lösung wird die Trocknungsverfahrensstufe durchgeführt, welche darin besteht, daß von den Flächen zwischen den Öffnungen Lösung entfernt wird, beispielsweise durch IR-Trocknung aber auch beispielsweise durch Tupfen mit einem hydrophobierten Tupfer. Wenn eine Amplifikationsverfahrenstufe durchgeführt wird, so empfiehlt es sich, die hierfür erforderlichen Reagentien der Lösung vor dem Kontaktieren der Rasterfläche zuzumischen.

Im Ergebnis wird eine definierte Verdünnung, die zudem mit extremen Verdünnungsfaktoren durchgeführt werden kann, und Füllung aller Rasterelemente mit den Verdünnungsfraktionen in einem sehr einfachen Arbeitsschritt simultan erreicht. Die Rasterelemente werden nicht zeitaufwendig sequentiell, sondern vielmehr parallel beladen. Dies erlaubt ohne zeitlichen Mehraufwand die Erstellung von Bibliotheken von nahezu beliebig hohen Populationen, deren Größe nur durch die könstruktive Gestaltung der Rasterelemente begrenzt ist. Zugleich ist als Vorteil gegeben, daß Reaktionen, z.B. Amplifikation, Transkription und/oder Expression, stets in Lösung durchgeführt werden können, wodurch hohe Umsatzraten gewährleistet sind. Schließlich kann beispielsweise PCR quantitativ durchgeführt werden ebenso wie LCR.

Die Herstellung einer Nukleinsäuren enthaltenden Lösung mit heterogener Population kann auf die verschiedensten Weisen erfolgen. Beipiele lassen sich beispielsweise den Literaturstellen Nucl. Acids Res., 17:3645, 1989, (Amplifikation genomischer Fragmente), Nucl. Acids Res., 18:3203, 1990, und Nucl. Acids Res., 18:6197, 1990, (chemische Festphasensynthese von DNA Molekülen in Syntheseautomaten). Die Anzahl der Mitglieder der Population kann grundsätzlich beliebig sein, es wird sich jedoch empfehlen, die Anzahl in der Größenordnung der Anzahl der Rasterelemente einer Rasteranordnung zu wählen.

### Ausführungsformen der Erfindung.

Im folgenden werden beispielhaft verschiedene Ausführungsformen der Erfindung erläutert.

Die Rasterelemente können grundsätzlich die verschiedensten Innenquerschnitte aufweisen. Aus Gründen der einfachen Herstellbarkeit ist es bevorzugt, wenn die Rasterelemente als vorzugsweise im wesentlichen zylinderförmig geformte Kapillarhohlräume ausgebildet sind.

Das Verhältnis der Länge zur Breite der Kapillarhohlräume liegt typischerweise im Bereich von 2 bis 500, vorzugsweise von 2 bis 20, höchstvorzugsweise von 5 bis 10. Als Breite ist das größte Maß in einer Ebene orthogonal zur Kapillarlängsachse bezeichnet. Die Breite der Kapillarhohlräume liegt typischerweise im Bereich von 0,1µm bis 1000µm, vorzugsweise von 0,1µm bis 100µm, höchstvorzugsweise von 0,1µm bis 10µm. Kleine Breiten gewährleisten einerseits eine hohe Dichte der Rasterelemente und andererseits eine hohe Steighöhe. Breite und Länge können in Abstimmung mit dem Material der Kapillarinnenfläche so gewählt sein, daß die Steighöhe bei orthogonal zur Flüssigkeitsoberfläche orientierter Kapillare zumindest so groß wie die Länge ist. Die Steighöhe läßt sich auch ggf. durch Zugabe von die Oberflächenspannung beeinflussenden Additiven zur Lösung erhöhen oder erniedrigen. Gleichfalls kann über die Benetzung der Kapillareninnenfläche modifizierende Beschichtungen der Kapillareninnenfläche die Steighöhe beeinflußt werden. Eine Verringerung bzw. Verhinderung des Umgriffs um die Kanten der Öffnungen kann durch Zugabe von die Viskosität der Lösung modifizierenden (erhöhende) Additiven zur Lösung erfolgen. Nicht orthogonal zur Flüssigkeitsoberfläche orientierte Kapillaranordnungen sind selbstverständlich ebenfalls möglich. Die laterale Dichte der Rasterelemente liegt typischerweise im Bereich von 1/mm² bis 10⁹/mm², vorzugsweise von 10²/mm² bis 10⁹/mm², höchstvorzugsweise von 10⁴/mm² bis 10⁹/mm²_{.}

Bevorzugt ist es, wenn die Kapillarhohlräume beidendig offen sind und wobei die jeweils einander gegenüberliegenden Öffnungen zueinander parallele Rasterflächen bilden. In diesem Fall ist eine stets vollständige Füllung der Kapillaren gewährleistet, sofern die Steighöhe bzw. das Kraftfeld ausreichend ist. Zudem läßt sich das erfindungsgemäßen Verfahren zum Kopieren dann besonders einfach ausüben.

Das Strukturmaterial der Rasterelemente kann ausgewählt sein aus der Gruppe bestehend aus "metallische Werkstoffe, oberflächenpassivierte metallische Werkstoffe, Keramikwerkstoffe, Gläser, Polymerwerkstoffe und Kombinationen dieser Werkstoffe". In jeden Fall ist zu gewährleisten, daß die Innenfläche der Rasterelemente zumindest z.T. keine hydrophoben Eigenschaften aufweist. Bei der Werkstoffauswahl ist auch darauf zu achten, daß der Werkstoff die durchzuführenden Reaktionen nicht stört. Als metallische Werkstoffe kommen beispielsweise Cr-Ni-Stähle und Gold in Frage. Ein oberflächenpassivierter metallischer Werkstoff ist Aluminium einschließlich der üblichen technischen Legierungen. Hinsichtlich der keramischen Werkstoffe sind neben Tonzeug insbesondere die Oxid-Gläser und Graphitkeramiken zu nennen. Allen diesen Gruppen ist eine sehr geringe Porosität gemeinsam. Als Gläser kommen alle labortechnisch üblichen Gläser in Frage. Geeignete Polymerwerkstoffe sind beispielsweise: HDPE, PET, PC und PP. Die Rasteranordnung kann dahingehend weitergebildet sein, daß die Flächen zwischen den Öffnungen hydrophobiert sind, beispielsweise mittels Beschichtung mit üblichen Hydrophobierungsmitteln auf Flour- und/oder Silikonbasis. Es ist auch zweckmäßig, wenn die Kanten der Öffnungen möglichst geringe Kantenradien aufweisen. Beides trägt zur Vermeidung eines Umgriffs der Kanten durch Lösung und folglich Querkontamination zwischen verschiedenen Rasterelementen bei.

Die Rasterelemente können innenseitig oberflächenmodifiziert sein mit Ankerstellen, vorzugsweise mit kovalenten Bindungsstellen, für Nukleinsäuren oder Proteine oder Peptide. Die Immobilisierung kann beispielsweise mittels Biotin/Streptavidin erfolgen. Dann lassen sich, beispielsweise nach einer Amplifikation oder einer Expression Waschverfahrensstufen anwenden, mit welchen Reaktionsmittel aus den Rasterelementen herausgespült werden.

### Herstellungsverfahren für Rasteranordnungen

Erfindungsgemäß einsetzbare Rasteranordnungen können auf die verschiedensten Weisen hergestellt werden.

Eine erste Methode besteht darin, handelsübliche Glaskapillaren vorgegebener Länge dicht zu packen, wobei die beiden Kapillarenden mit ihren Öffnungen jeweils zwei zueinander parallele Rasterflächen bilden. Auf gleiche Weise kann mit handelsüblichen Metallkapillaren, ggf. mit einer Innenbeschichtung versehen, verfahren werden. Wenn die Länge der erhältlichen Kapillaren größer als gewünscht ist, so kann eine aus den Kapillaren gebildete Packung in Richtung orthogonal zu den Kapillarenachsen geschnitten werden, wodurch Kapillarenplatten mit Rasterelementen geringer Länge entstehen.

Ebenso einsetzbar sind fertige Kapillarplatten, wie beispielsweise Mikrokanalplatten der Firma Hamamatsu Photonics Deutschland GmbH. Diese Platten weisen eine Vielzahl von orthogonal zu den Hauptflächen verlaufende einander gleichende Kanäle mit einem Kanaldurchmesser von bis zu 10µm hinunter auf.

Kapillarplatten können auch beispielsweise durch selektives Ätzen von Glasplatten hergestellt werden. Eine andere Technik zur Erzeugung von Mikrokanälen bzw. Kapillaren ist Laserbohren. Hiermit lassen sich in nahezu beliebigen Werkstoffen Kapillaren mit sehr großer Genauigkeit hinsichtlich Innendurchmesser und Rasteranordnung erzeugen.

Auch unter Verwendung von im Bereich der Halbleiterindustrie üblichen Verfahren zur Erzeugung von Topographien können Kapillarplatten erzeugt werden. Hier kommen insbesondere phototechnische Verfahren in Frage. Kapillaren mit extrem geringem Innendurchmesser und extrem hoher Dichte lassen sich dabei beispielsweise mittels Belichtungsverfahren erzeugen, welche mit Synchrotronstrahlung arbeiten. Im einzelnen wird ergänzend auf die einschlägige Fachliteratur zur Herstellung von Halbleitertopographien verwiesen.

### Assay-Formate

Zum Nachweis von Rasterelementinhalten, Reaktionen und/oder Wechselwirkungen der Rasterelementinhalte können grundsätzlich die verschiedensten fachüblichen Verfahren eingesetzt werden. Dies sind beispielsweise: UV-scanning, Molecular Beacons, Exonuclease Probes, Szintillation Proximity Assay, Fluorescence Resönance Energy Transfer, Homogenous Time-Resolved Fluorescense, Fluorescence Polarisation, Filter Binding Assay, Massenspektrometrie, MALDI-TOF und NMR. Es versteht sich, das die jeweils eingesetzten Detektoren für eine entsprechend der Rasteranordnung ausreichend feine Ortsauflösung eingerichtet sein müssen. Im Falle der Verwendung von Glaswerkstoffen in Verbindung mit optischen Nachweismethoden ist darauf zu achten, daß kein "Ubersprechen" der Signale aus verschiedenen Rasterelementen möglich ist, beispielsweise durch Einsatz von opaken Gläsern. Die Auslesung kann parallel oder sequenziell erfolgen. Eine parallele Auslesung kann beispielsweise mittels CCD-Elementen ausreichend hoher Pixeldichte oder mittels Filmen erfolgen, ggf. mit zwischenschaltung geeigneter Optiken. Eine sequentielle Auslesung kann durch subsequentes "Anfahren" der einzelnen Rasterelemente erfolgen, beispielsweise durch mechanische Verschiebung von Detektoren und/oder ggf. zwischengeschalteter Optiken. Hinsichtlich der verschiedenen Assay Formate wird ergänzend auf die einschlägige Fachliteratur verwiesen.

In jedem Fall muß eine zuverlässige Zuordnung eines Signals zu einem bestimmten Rasterelement möglich sein. Hierzu empfiehlt es sich, Referenzortspunkte einzurichten. Eine sehr einfache Möglichkeit besteht in der Einrichtung einer oder zwei mechanisch ausreichend genau gearbeiteten Referenzkanten an einem Rand oder zwei Rändern der Rasteranordnung. Diese Referenzkanten brauchen dann nur mit korrespondierenden Anschlagelementen der jeweiligen Apparaturen in Anschlag gebracht zu werden und mit der bekannten Geometrie der Anordnung der Rasterelemente ist dann eine zuverlässige Zuordnung von Ortskoordinaten zu den Rasterelementen möglich. Es sind natürlich auch die verschiedensten anderen mechanischen Ausführungen zur Positionierung von Bauelementen einsetzbar, beispielsweise eigenständige Anschlagelemente und/oder Formschlußelemente, auch in oder an den Hauptflächen Rasteranordnung. Die exakte Ausrichtung ist im übrigen nicht nur bei der Detektion elementar, sondern auch bei der Herstellung von Kopien. Hier müssen die Vorlage-Rasterahordnung und die Köpie-Rasteranordnung exakt gegeneinander ausgerichtet sein.

Referenzpunkte können aber auch nicht-mechanisch sein. So ist es möglich in der Ebene einer Rasterfläche an definierten Orten ein oder zwei oder mehrere signalgebende Elemente einzurichten, welche anhand eines Detektors ortsaufgelöst detektiert werden. Mit den detektierten signalgebenden Elementen ist dann die Gesamtposition der Rasteranordnung und somit der einzelnen Rasterelemente bekannt. Signalgebende Elemente können beispielsweise im Rahmen eines Rasterelements, aber auch zwischen Rasterelementen geschaffen sein. Es empfiehlt sich, die signalgebenden Elemente so auszuwählen, daß die davon emittierten Signale mit dem gleichen Detektor gemessen werden, wie zur Messung von Messignalen as den Rasterelementen.

### Bindung von Substanzen an Rasterelementinnenflächen.

In bestimmten Zusammenhängen kann es sich empfehlen, die Nukleinsäuren, Proteine oder Peptide an der Rasterelementinnenfläche zu verankern bzw. zu immobilisieren. Dies ist insbesondere dann notwendig, wenn Waschverfahrensschritte zwischengeschaltet werden sollen. Hierzu wird typischerweise die Innenfläche oberflächenmäßig modifiziert. Alle fachüblichen Methoden sind geeignet.

Im folgenden werden weitere Ausführungsformen der Erfindung, insbesondere auch Verwendungen, anhand der Figuren näher erläutert.

Es zeigen:
Figur 1: Herstellung einer Nukleinsäurebibliothek,
Figur 2: Verfahren zum vollständigen Füllen einseitig geschlossener Rasteranordnungen,

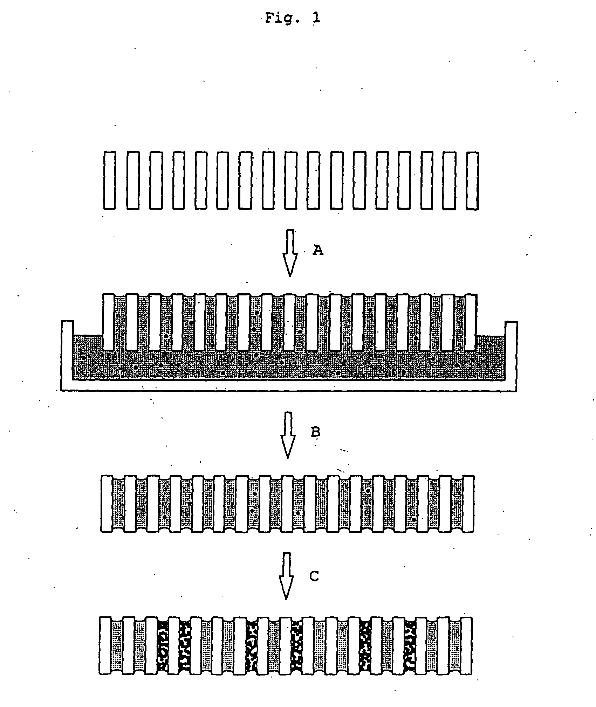

In der Figur 1 ist die Herstellung einer Nukleinsäurebibliothek dargestellt. Zunächst erfolgt eine chemische Synthese einer DNA-Bibliothek mit beispielsweise 60 randomisierten Positionen. Dann erfolgt eine Verdünnung der Bibliothek und die Beladung der Rasteranordnung. Im Ausführungsbeispiel wird dabei lediglich die Kapillarkraft genutzt. Nach dem Befüllen erfolgt eine partielle Gefriertrocknung. Eine Erhöhung der Nukleinsäurekonzentrationen in den Rasterelementen erfolgt mittels PCR in Gegenwart von Ethidiumbromid. Die Identifizierung der Rasterelemente wird mit Amplifikaten durch Flureszenzmikroskopie (Anregung bei 300 nm und Messung bei 600 nm) durchgeführt. Die Entnahme der klonierten Amplifikate erfolgt über eine Mikrokapillare und Überführung in Standard PCR-Ansätze. Die Analyse der Amplifikate erfolgt durch Standard-Didesoxy-Sequenzierung. Mit dem Ergebnis wird ein Vergleich mit der Sequenzierung der Ausgangsbibliothek (Durchgehende Banden in allen vier Sequenzierungsspuren) durchgeführt. Schließlich erfolgt eine Einführung von immobilisierbaren Primern.

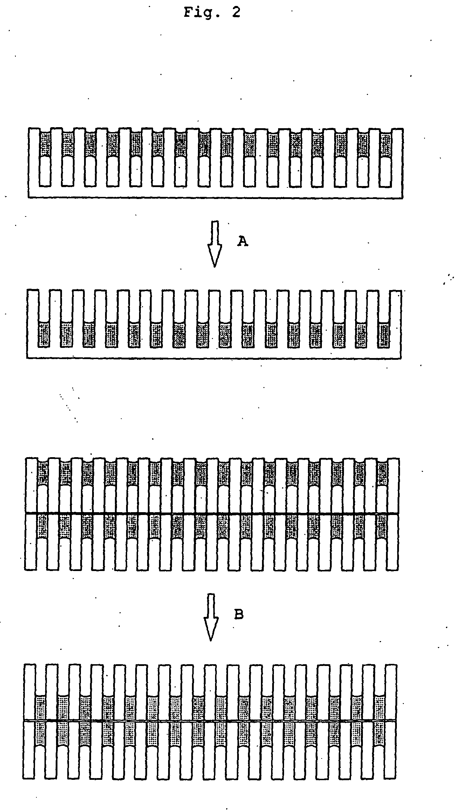

Die Figur 2 beschreibt ein Verfahren zum vollständigen Füllen einseitig verschlossener Rasteranordnungen. (A): Nach Auftrag der Flüssigkeit kann die Kapillaranordnug im Zentrifugalfeld beschleunigt werden, bis die Flüssigkeit den Boden der verschlossenen Rasterelemente erreicht. (B): Bei zwei Kapillaranordnungen, die durch Dialysemembranen getrennt werden, wird zunächst eine erste Seite durch Zentrifugation, wie unter (A) beschrieben, gefüllt. Die zweite Seite der Kapillaranordnung wird in einem zweiten Zentrifugationsschritt bis zur Membran gefüllt. Ein Austreten der Flüssigkeit aus den Elementen der ersten Seite kann durch Verschluss der ersten Seite verhindert werden. Vorzugsweise werden zwei verschiedene Rasteranordnungen gewählt. Die Adhäsion der Flüssigkeit in den Rasterelementen der ersten Seite ist größer als die der zweiten Seite (kleinerer Kapillardurchmesser oder Material mit höherer Adhäsion). Das Auslaufen der bereits gefüllten Kapillaranordnung wird durch Wahl geeigneter Rotationsgeschwindigkeiten bei der Zentrifugation erreicht. Die Dialysemembran dient z.B. zur Zuführung oder Abtrennung niedermolekularer Komponenten bei der Expression von Rasterelementen.

## Patentansprüche

1. Verfahren zur Herstellung einer Nukleinsäurenbibliothek in Form einer zweidimensional ortsaufgelösten Rasteranordnung mit einer Vielzahl von Rasterelementen, wobei jedes Rasterelement im statistischen Mittel eine gewünschte Anzahl von Nukleinsäuretypen mit jeweils spezifischer Sequenzinformation enthält, und wobei in verschiedene Rasterelemente eingebrachte Fluide nicht miteinander kommunizieren, mit folgenden Verfahrensschritten:
a) es wird eine zweidimensionale Rasteranordnung aus als Öffungen aufweisende Hohlräume ausgebildeten Rasterelementen gebildet,
b) die Öffnungen der Hohlräume werden mit einer verschiedene Nukleinsäuren enthaltenden Lösung in Kontakt gebracht, wobei unter Mitwirkung von Kapillarkräften in jedes Rasterelement eine Teilmenge der Lösung angesaugt wird,
c) die Öffnungen der Hohlräume werden von der Lösung getrennt, und
d) es wird eine Trocknungsverfahrenstufe durchgeführt, welche darin besteht, dass von Flächen zwischen den Öffnungen Lösung entfernt wird,
wobei die Konzentration der Nukleinsäuren in der Lösung und die Dimensionierung der Hohlräume und deren Öffnungen in Hinblick auf die Größe der in ein Rasterelement angesaugten Teilmenge an Lösung mit der Maßgabe aufeinander abgestimmt sind, daß die in ein Rasterelement aufgesaugte Teilmenge an Lösung im statistischen Mittel eine gewünschte Anzahl an Nukleinsäuremolekülen enthält.

2. Verfahren nach Anspruch 1, wobei nach der Stufe d) in einer Stufe e) die Rasteranordnung insgesamt einer Amplifikationsverfahrensstufe unterworfen wird.

## Claims

1. A method for producing a nucleic acid library in the form of a two-dimensionally resolved grid-type arrangement with a plurality of grid elements, wherein every grid element contains, on the statistical average, a desired number of nucleic acid types having a respective specific sequence information, and wherein fluids introduced into different grid elements do not communicate with each other, comprising the following steps:
a) a two-dimensional grid-type arrangement of grid elements configured as hollow spaces with openings is formed,
b) the openings of the hollow spaces are contacted with a solution containing different nucleic acids, under the action of capillary forces a partial amount of the solution being suctioned into every grid element,
c) the openings of the hollow spaces are separated from the solution, and
d) a drying step is carried out consisting in that solution is removed from areas between the openings, the concentration of the nucleic acids in the solution and the dimensions of the hollow spaces and of the openings thereof being adjusted with regard to the partial amount of solution suctioned into a grid element such that the partial amount of solution absorbed in a grid element contains, on the statistical average, a desired number of nucleic acid molecules.

2. The method according to claim 1, wherein after step d) in a step e) the grid-type arrangement in total is subjected to an amplification step.

## Revendications

1. Procédé pour la production d'une bibliothèque d'acides nucléiques sous la forme d'un arrangement du type grille résolu en deux dimensions, comprenant une pluralité d'éléments de grille, dans lequel chaque élément de grille comprend, dans la moyenne statistique, un nombre désiré de types d'acides nucléiques ayant une information de séquence spécifique respective, et dans lequel des fluides introduits dans des éléments de grille différents ne communiquent pas l'un avec l'autre, comprenant les étapes suivantes:
a) un arrangement du type grille à deux dimensions est formé à partir d'éléments de grille configurés comme des cavités avec des ouvertures,
b) les ouvertures des cavités sont contactées avec une solution comprenant des acides nucléiques différents, sous l'action de forces capillaires une quantité partielle de la solution étant aspirée dans chaque élément de grille,
c) les ouvertures des cavités sont séparées de la solution, et
d) une étape de séchage est effectuée consistant en ce que de la solution est enlevée des zones entre les ouvertures, la concentration des acides nucléiques dans la solution et les dimensions des cavités et des ouvertures de celles-ci étant ajustées par rapport à la quantité partielle de la solution aspirée dans un élément de grille, de sorte que la quantité partielle de la solution absorbée dans un élément de grille contienne, dans la moyenne statistique, un nombre désiré de molécules d'acides nucléiques.

2. Procédé selon la revendication 1, dans lequel après l'étape d) en une étape e) l'arrangement du type grille en tout est soumis à une étape d'amplification.
